# EUROPÄISCHE PATENTSCHRIFT

(11) **EP 0 673 401 B1**
(45) Veröffentlichungstag und Bekanntmachung des Hinweises auf die Patenterteilung: **08.07.1998**
(21) Anmeldenummer: 94902601.7
(22) Anmeldetag: 07.12.1993
(51) Int. Cl.: C09D 11/08, C09D 11/02

(54) **TOLUOLTIEFDRUCKFARBE ODER FLEXDRUCKFARBE, DIE EIN ADDITIV ZUR REDUZIERUNG DES RESTTOLUOLGEHALTS VON HERGESTELLTEN DRUCKEN ENTHÄLT**
TOLUENE GRAVURE INK OR FLEXO-PRINT INK CONTAINING AN ADDITIVE TO REDUCE THE RESIDUAL TOLUENE CONTENT OF PRINTS MADE BY GRAVURE AND/OR FLEXO-PRINTING, AND SAID ADDITIVE
ENCRE D'HELIOGRAVURE AU TOLUENE OU ENCRE DE FLEXOGRAPHIE COMPRENANT UN ADDITIF POUR REDUIRE LA TENEUR RESIDUELLE EN TOLUENE DES TIRAGES REALISES PAR HELIOGRAVURE ET/OU PAR FLEXOGRAPHIE ET ADDITIF CONCERNE

(30) Priorität: 11.12.1992 DE 4241916
(43) Veröffentlichungstag der Anmeldung: 27.09.1995
(73) Patentinhaber: SUN CHEMICAL HOLDING GMBH, D-60388 Frankfurt am Main (DE)
(72) Erfinder: MUSSNER, Franz, D-83119 Frabertsham (DE)
(74) Vertreter: Antritter, Jürn Dietolf Gerald
(86) Internationale Anmeldenummer: DE9301179
(87) Internationale Veröffentlichungsnummer: WO9413747

(56) Entgegenhaltungen:
- DE-A- 2 547 967
- NL-A- 8 701 396
- DATABASE WPI Week 9122, Derwent Publications Ltd., London, GB; AN 91-160633 & JP,A,3 096 390 (DAINIPPON PRINTING CO LTD) 22. April 1991

## Beschreibung

Die Erfindung betrifft eine Toluoltiefdruckfarbe oder Flexodruckfarbe, die ein Additiv zur Reduzierung des Resttoluolgehalts von im Tiefdruck- und/oder Flexodruckverfahren hergestellten Drucken enthält, sowie dieses Additiv.

Illustrierte, Versandhauskataloge und ähnliche Publikationen werden in Deutschland nahezu ausnahmslos im Illustrations-Tiefdruck hergestellt. Bei diesen Druckverfahren bedient man sich gravierter oder geätzter Druckzylinder, die nach der bilderzeugenden Ätzung oder Gravur aus Gründen des Verschleißschutzes mit einer Chromschicht versehen werden. Der Tiefdruckzylinder rotiert in einer mit niedrigviskoser Druckfarbe gefüllten Farbwanne, wobei sich die gravierten oder geätzten Näpfchen des Druckzylinders mit Farbe füllen. Die auf der restlichen Zylinderfläche befindliche Druckfarbe wird durch ein Rakelmesser abgestreift, so daß beim anschließenden Druck nur die Druckfarbe auf den Bedruckstoff gelangt, die in den Näpfchen enthalten ist.

Der Illustrationstiefdruck ist ein extrem schneller Druck mit Druckgeschwindigkeiten bis zu 900 m/min. Das macht den Einsatz spezieller Druckfarben notwendig. Diese Druckfarben müssen niedrigviskos sein, wobei als alleiniges Lösungsmittel Toluol verwendet wird. Toluol ist zudem ein hervorragendes Lösungsmittel für die Harze, die beim Illustrationstiefdruck zur Formulierung der Druckfarbenbindemittel benötigt werden. Durch die rasche Verdunstung des Toluols kann ein Druck auch bei den hohen Druckgeschwindigkeiten durch eine Warmlufttrocknung sehr schnell getrocknet werden.

Das im Zuge der Trocknung aus den Druckfarbenschichten entfernte Toluol wird aus der Abluft durch geeignete Adsorber entfernt und durch ein ausgereiftes Desorptionsverfahren wiedergewonnen.

Toluol wird jedoch in der deutschen Gefahrstoffverordnung, Anhang VI, als gesundheitsschädlicher Arbeitsstoff definiert und ist in die Schwangerschaftsgruppe B eingestuft.

Von daher erweist es sich als nachteilig, beim Illustrationstiefdruck mit den heute üblichen Farben, daß die fertigen Druckerzeugnisse einen hohen Restgehalt an Toluol aufweisen.

Im Stand der Technik sind Tiefdruckfarben bekannt. Zum Beispiel beschreibt die JP 04-213375 A (EDV-Japio-Abstract) eine Tiefdruckfarbe zur Wärmebeschichtung, die spezielle Harze als Bindemittel enthält. Sie vermittelt jedoch keine Anregung, wie der hohe Restgehalt an Toluol von im Tiefdruck- und/oder Flexodruckverfahren hergestellten Druckerzeugnissen verringert werden könnte.

Aufgabe der Erfindung ist es daher, neue Druckfarben und Additive für Druckfarben bereitzustellen, die zu einer wesentlichen Reduzierung des Resttoluolgehalts von im Tiefdruck- und/oder Flexodruckverfahren hergestellten Druckerzeugnissen führen.

Die Aufgabe wird überraschenderweise durch eine Toluoltiefdruckfarbe oder Flexodruckfarbe gelöst, die kein Ethylen-/Vinylacetat-Copolymerisat und/oder chloriertes Polypropylen und/oder Vinylchlorid-/Isobutylvinylether-Copolymerisat enthält, die dadurch gekennzeichnet ist, daß sie 1-10 Gew.% eines Additivs enthält, das 0-90 Gew.% Toluol, 0-50 Gew.% eines Harzes und 10-100 Gew.% einer Komponente mit einem Siedebereich von über 180°C enthält.

Bevorzugt ist eine Druckfarbe, die dadurch gekennzeichnet ist, daß sie 2-5 Gew.% des Additivs enthält.

Besonders bevorzugt ist eine Buntfarbe, die das Additiv in den genannten Mengen sowie ferner 5-40 Gew.%, vorzugsweise 10-20 Gew.% Pigment und/oder Farbstoff, 5-50 Gew.%, vorzugsweise 10-40 Gew.%, Kolophonium- und/oder Tallölderivate, 0-40 Gew.%, vorzugsweise 10-30 Gew.%, Kohlenwasserstoffharze, 0-5 Gew.%, vorzugsweise 0,5-3 Gew.%, Hilfsstoffe und 30-70 Gew.%, vorzugsweise 45 bis 55 Gew.%, Toluol enthält.

Bevorzugt ist ferner eine Schwarzfarbe, die das Additiv in den genannten Mengen und ferner 5-25 Gew.%, vorzugsweise 10-15 Gew.%, Ruß und ggfs. Pigment und/oder Farbstoff, 5-30 Gew.%, vorzugsweise 10-20 Gew.%, Kolophonium- und/oder Tallölderivate, 0-10 Gew.%, vorzugsweise 0-5 Gew.%, Kohlenwasserstoffharze, 0-30 Gew.%, vorzugsweise 15-20 Gew.%, Asphalt, 30-70 Gew.%, vorzugsweise 45-55 Gew.%, Toluol und 0-5 Gew.%, vorzugsweise 0,5 bis 3 Gew.%, Hilfsstoffe enthält.

Bei den Bunt- und Schwarzfarben können als Pigmente bzw. Farbstoffe z.B. für Gelb Diaryldiazo-Pigmente, P.Y. 12, für Rot Monoazopigmente, P.R. 57:1, für Blau Phthalocyaninblau, P.B. 15:3, oder Eisenblau, P.B. 27, und als Farbstoff z.B. Xanthenfarbstoff, P.R. 53:1, eingesetzt werden.

In den Bunt- und Schwarzfarben sowie den Verschnitten können als Kolophonium- und/oder Tallölderivate Metallresinate und phenolmodifizierte Kolophoniumharze eingesetzt werden.

Als Kohlenwasserstoffharze können modifzierte Kohlenwasserstoffharze und Cumaron-Indenharze eingesetzt werden.

Als Harzester kann Styrol-Maleinsäureester eingesetzt werden.

Als Hilfsstoffe können Polyethylenwachse, Dispergier- und/oder Benetzungshilfsmittel, wie z.B. Carbonsäurederivate, Antiabsetzmittel und Verdicker, wie z.B. Schichtsilikate und Ethylcellulosen, wie Tixogel VP, eingesetzt werden.

Desweiteren ist ein Gegenstand der Erfindung ein Verschnitt für eine Toluoltiefdruck- oder Flexodruckfarbe, der 1 bis 10 Gew.%, vorzugsweise 2-4 Gew.%, des Additivs und ferner 0-30 Gew.%, vorzugsweise 20-30 Gew.%, Kolophonium- und/oder Tallölderivate, 0-20 Gew.%, vorzugsweise 5-15 Gew.%, Kohlenwasserstoffharze, 0-15 Gew.%, vorzugsweise 5 bis 15 Gew.%, Naturharze, 0-20 Gew.%, vorzugsweise 0-10 Gew.%, Harzester, 0-5 Gew.%, vorzugsweise 3-5 Gew.%, Hilfsstoffe und 40-70 Gew.%, vorzugsweise 55-65 Gew.%, Toluol enthält.

Die Aufgabe wird desweiteren erfindungsgemäß durch ein Additiv zur Reduzierung des Resttoluolgehalts von im Tiefdruck- und/oder Flexodruckverfahren hergestellten Drucken gelöst, das 1-10 Gew.% Toluol, 1-10 Gew.% eines Harzes und 90-100 Gew.% einer Komponente mit einem Siedebereich von über 180°C enthalten, die aus einer oder mehrerer der Substanzklassen, Mineralöl, Polyalkylbenzol, pflanzliches Öl, Glykolether, Glykolester, Glykoletherester und Polyisobutylen ausgewählt ist.

Gegenstand der Erfindung ist ferner die Verwendung eines Additivs, das 0-90 Gew.% Toluol, vorzugsweise 1-10 Gew.% Toluol, 0-50 Gew.% eines Harzes, vorzugsweise 1-10 Gew.% eines Harzes und 10-100 Gew.%, vorzugsweise 90-100 Gew.%, einer Komponente mit einem Siedebereich von über 180°C enthält, zur Reduzierung des Resttoluolgehalts von im Tiefdruck- und/oder Flexodruckverfahren hergestellten Drucken, wobei die Komponente vorzugsweise aus einer oder mehrerer der Substanzklassen Mineralöl, Polyalkylbenzol, pflanzliches Öl, Glykolether, Glykolester, Glykoletherester und Polyisobutylen ausgewählt ist.

Dieses Additiv löst die Aufgabe vorzüglich, was umso mehr überrascht, da es selbst Toluol enthält.

Als Harze können kolophoniumbasierende und/oder tallölbasierende Harze, Kohlenwasserstoffharze, Harzester, Naturharze, wie z.B. Dammar, eingesetzt werden.

Als Mineralöl können Mineralöle mit den folgenden Handelsbezeichnungen eingesetzt werden: Printosol C800/AP73, Pionier 6871, Pionier 6710 SH, Gravex 921. Als Polyalkylbenzole eignen sich z.B. Mediaplast VP 2160, Mediaplast PM und Mediaplast TR. Als pflanzliche Öle können Sojaöl, Rapsöl und Lackleinöl eingesetzt werden. Als Glykolether eignet sich z.B. Butyldiglykol, Triethylenglykoldimethylether und Tetraethylenglykoldimethylether. Als Glykolester können Butyldiglykolacetat und Butylglykolacetat eingesetzt werden. Als Polyolefine eignen sich z.B. Polyisobutylene und Oppanol B1.

Für die Auswahl der hochsiedenden Komponenten ist es wesentlich, daß die in der Druckfarbe verwendeten Bindemittelsysteme eine gewisse Löslichkeit in der hochsiedenden Komponente besitzen.

Die folgenden Beispiele sollen die überraschende und überaus vorteilhafte Wirkung der erfindungsgemäßen Druckfarben zeigen. Dabei konnte eine Reduzierung des Resttoluolgehalts in den Druckexemplaren bis auf nahezu ein Zehntel gegenüber nach dem Stand der Technik hergestellten Druckexemplaren erreicht werden.

### Beispiele

In den Beispielen wurden Farben mit folgenden Rezepturen eingesetzt:

**Tabelle 1**

| | Gelb | Rot | Blau 1 | Blau 2 | Schwarz | Verschnitt |
|---|---|---|---|---|---|---|
| Pigment/Ruß/Farbstoff | 7 % | 10 % | 14 % | 17 % | 15 % | - |
| Kolophonium-/Tallölprodukt | 27 % | 15 % | 18 % | 22 % | 22 % | 27 % |
| KW-Harze | 5 % | 22 % | 19 % | 9 % | 1 % | 4 % |
| Asphalt | - | - | - | - | 11 % | - |
| Naturharze | - | - | - | - | - | 10 % |
| Hilfsstoffe | 1 % | 1 % | 2 % | 1 % | 1 % | 2 % |
| Toluol | 60 % | 52 % | 47 % | 51 % | 50 % | 47 % |

Es wurden mit den Farben Gelb, Rot, Blau 1, Blau 2 und Schwarz Laborandrucke unter folgenden Bedingungen hergestellt:
Druckmaschine: Testacolor
Druckform: gravierter Zylinder
Druckviskosität: 21 s/3 mm nach DIN
Druckgeschwindigkeit: 1,5 m/s
Bedruckstoff: Naturpapier, 55 g/m², Hersteller Albtal Vollton, einseitig bedruckt

Aus der Tabelle 2 ergeben sich die aufgrund einer Gaschromatographieanalyse gefundenen Werte für den Resttoluolgehalt von 50 cm² großen Prüflingen für Farben nach dem Stand der Technik sowie für Farben, die das erfindungsgemäße Additiv enthalten. Sämtliche Angaben beziehen sich auf die Menge Resttoluol in mg/m² Papier.

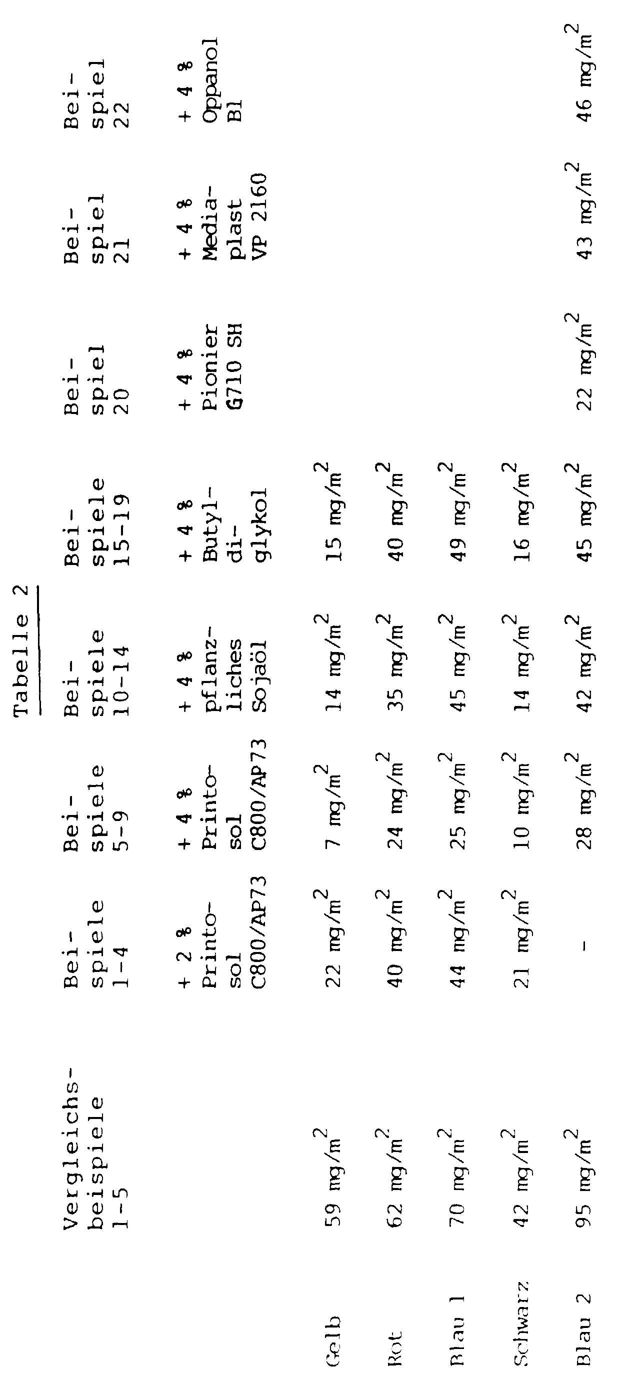

Es wurden ferner mit obengenannten Farben Testdrucke unter Praxisbedingungen hergestellt:
Druckmaschine: KBA TR 8 (Albert-Frankenthal)
Arbeitsbreite: 3,08 m
Druckform: gravierte Zylinder (2 x 4 Druckwerke) Druckgeschwindigkeit: 45.000 m/h
Druckviskosität: 20 s/3 mm nach DIN
Trocknerbedingungen: Widerdruckwerk Schwarz 80°C, alle üb rigen Druckwerke 38-40°C, maximale Luftmenge
Bedruckstoff: Naturpapier, ca. 60 g/m²

Tabelle 3 zeigt die Ergebnisse der gaschromatographischen Analysen.

**Tabelle 3**

| | Vergleichsbeispiel 6 und 7 | Beispiel 23 u. 24 | Beispiel 25 u. 26 |
|---|---|---|---|
| Ort der Probeentnahme | Farbsatz nach dem Stand der Technik | + 2 % Printosol C800/AP73 | + 4 % Printosol C800/AP73 |
| Steuerpult | 100 mg/m² | 75 mg/m² | 60 mg/m² |
| Ablage | 90 mg/m² | 65 mg/m² | 45 mg/m² |

## Patentansprüche

1. Toluoltiefdruckfarbe oder Flexodruckfarbe, wobei eine Druckfarbe ausgenommen ist, die Ethylen-/Vinylacetat-Copolymerisat und/oder chloriertes Polypropylen und/oder Vinylchlorid-/Isobutylvinylether-Copolymerisat enthält, dadurch gekennzeichnet, daß sie
30-70 Gew.% Toluol,
5-40 Gew.% Pigment und/oder Farbstoff,
5-50 Gew.% Kolophonium- und/oder Tallölderivate,
0-40 Gew.% Kohlenwasserstoffharze,
0-5 Gew.% Hilfsstoffe und
1-10 Gew.-% eines Additivs enthält, das
0-90 Gew.% Toluol,
0-50 Gew.% eines kolophoniumbasierenden und/oder tallölbasierenden Harzes, eines Kohlenwasserstoffharzes oder Naturharzes und
10-100 Gew.% einer Komponente mit einem Siedebereich von über 180°C enthält, die aus einer oder mehrerer der Substanzklassen, Mineralöl, Polyalkylbenzol, pflanzliches Öl, Glykolether, Glykolester, Glykoletherester und Polyisobutylen ausgewählt ist.

2. Toluoltiefdruckfarbe oder Flexodruckfarbe, wobei eine Druckfarbe ausgenommen ist, die Ethylen-/Vinylacetat-Copolymerisat und/oder chloriertes Polypropylen und/oder Vinylchlorid-/Isobutylvinylether-Copolymerisat enthält, dadurch gekennzeichnet, daß sie
30-70 Gew.% Toluol,
5-25 Gew.% Ruß und gegebenfalls Pigment und/oder Farbstoff,
5-30 Gew.% Kolophonium- und/oder Tallölderivate,
0-10 Gew.% Kohlenwasserstoffharze,
0-30 Gew.% Asphalt,
0-5 Gew.% Hilfsstoffe und
1-10 Gew.% eines Additivs enthält, das
0-90 Gew.% Toluol,
0-50 Gew.% eines kolophoniumbasierenden und/oder tallölbasierenden Harzes, eines Kohlenwasserstoffharzes oder Naturharzes und
10-100 Gew.% einer Komponente mit einem Siedebereich von über 180°C enthält, die aus einer oder mehrerer der Substanzklassen, Mineralöl, Polyalkylbenzol, pflanzliches Öl, Glykolether, Glykolester, Glykoletherester und Polyisobutylen ausgewählt ist.

3. Verschnitt für eine Toluoltiefdruckfarbe oder Flexodruckfarbe, wobei ein Verschnitt ausgenommen ist, der Ethylen-/Vinylacetat-Copolymerisat und/oder chloriertes Polypropylen und/oder Vinylchlorid-/Isobutylvinylether-Copolymerisat enthält, dadurch gekennzeichnet, daß er
40-70 Gew.% Toluol,
0-30 Gew.% Kolophonium- und/oder Tallölderivate,
0-20 Gew.% Kohlenwasserstoffharze,
0-15 Gew.% Naturharze,
0-20 Gew.% Harzester,
0-5 Gew.% Hilfsstoffe und
1-10 Gew.-% eines Additivs enthält, das
0-90 Gew.% Toluol,
0-50 Gew.% eines kolophoniumbasierenden und/oder tallölbasierenden Harzes, eines Kohlenwasserstoffharzes oder Naturharzes und
10-100 Gew.% einer Komponente mit einem Siedebereich von über 180°C enthält, die aus einer oder mehrerer der Substanzklassen, Mineralöl, Polyalkylbenzol, pflanzliches Öl, Glykolether, Glykolester, Glykoletherester und Polyisobutylen ausgewählt ist.

4. Verschnitt nach Anspruch 3, dadurch gekennzeichnet, daß er 2-4 Gew.% des Additivs enthält.

5. Additiv zur Reduzierung des Resttoluolgehalts von im Tiefdruck- und/oder Flexodruckverfahren hergestellten Drucken, enthaltend
1-10 Gew.% Toluol,
1-10 Gew.% eines kolophoniumbasierenden und/oder tallölbasierenden Harzes, eines Kohlenwasserstoffharzes oder Naturharzes und
wenigstens 90 Gew.% einer Komponente mit einem Siedebereich von über 180°C, die aus einer oder mehrerer der Substanzklassen, Mineralöl, Polyalkylbenzol, pflanzliches Öl, Glykolether, Glykolester, Glykoletherester und Polyisobutylen ausgewählt ist.

6. Verwendung eines Additivs zur Reduzierung des Resttoluolgehalts von im Tiefdruck- und/oder Flexodruckverfahren hergestellten Drucken, das
0-90 Gew.% Toluol,
0-50 Gew.% eines kolophoniumbasierenden und/oder tallölbasierenden Harzes, eines Kohlenwasserstoffharzes oder Naturharzes und
10-100 Gew.% einer Komponente mit einem Siedebereich von über 180°C enthält, die aus einer oder mehrerer der Substanzklassen, Mineralöl, Polyalkylbenzol, pflanzliches Öl, Glykolether, Glykolester, Glykoletherester und Polyisobutylen ausgewählt ist.

7. Verwendung eines
1-10 Gew.% Toluol,
1-10 Gew.% eines kolophoniumbasierenden und/oder tallölbasierenden Harzes, eines Kohlenwasserstoffharzes oder Naturharzes und
wenigstens 90 Gew.% einer Komponente mit einem Siedebereich von über 180°C enthaltenden Additivs, wobei die Komponente aus einer oder mehrerer der Substanzklassen, Mineralöl, Polyalkylbenzol, pflanzliches Öl, Glykolether, Glykolester, Glykoletherester und Polyisobutylen ausgewählt ist, zur Reduzierung des Resttoluolgehalts von im Tiefdruck- und/oder Flexodruckverfahren hergestellten Drucken.

## Claims

1. Toluene intaglio printing ink or flexo printing ink not comprising a printing ink which contains ethylene/vinyl acetate copolymer and/or chlorinated polypropylene and/or vinyl chloride/isobutyl vinyl ether copolymer, characterized in that it contains
30-70% by weight of toluene,
5-40% by weight of pigment and/or colorant,
5-50% by weight of colophony derivatives and/or tall oil derivatives,
0-40% by weight of hydrocarbon resins,
0-5% by weight of auxiliary agents and
1-10% by weight of an additive containing
0-90% by weight of toluene,
0-50% by weight of a resin based on colophony and/or tall oil, a hydrocarbon resin or natural resin and
10-100% by weight of a component having a boiling range of above 180°C, which is selected from one or more of the substance classes of mineral oil, polyalkylbenzene, vegetable oil, glycolether, glycolester, glycolether ester and polyisobutylene.

2. Toluene intaglio printing ink or flexo printing ink not comprising a printing ink which contains ethylene/vinyl acetate copolymer and/or chlorinated polypropylene and/or vinyl chloride/isobutyl vinyl ether copolymer, characterized in that it contains
30-70% by weight of toluene,
5-25% by weight of carbon black and optionally pigment and/or colorant,
5-30% by weight of colophony derivatives and/or tall oil derivatives,
0-10% by weight of hydrocarbon resins,
0-30% by weight of asphalt,
0-5% by weight of auxiliary agents and
1-10% by weight of an additive containing
0-90% by weight of toluene,
0-50% by weight of a resin based on colophony and/or tall oil, a hydrocarbon resin or natural resin and
10-100% by weight of a component having a boiling range of above 180°C, which is selected from one or more of the substance classes of mineral oil, polyalkylbenzene, vegetable oil, glycolether, glycolester, glycolether ester and polyisobutylene.

3. Extender for a toluene intaglio printing ink or flexo printing ink not comprising an extender which contains ethylene/vinyl acetate copolymer and/or chlorinated polypropylene and/or vinyl chloride/isobutyl vinyl ether copolymer, characterized in that it contains
40-70% by weight of toluene,
0-30% by weight of colophony derivatives and/or tall oil derivatives,
0-20% by weight of hydrocarbon resins,
0-15% by weight of natural resins,
0-20% by weight of resin ester,
0-5% by weight of auxiliary agents and
1-10% by weight of an additive containing
0-90% by weight of toluene,
0-50% by weight of a resin based on colophony and/or tall oil, a hydrocarbon resin or natural resin and
10-100% by weight of a component having a boiling range of above 180°C, which is selected from one or more of the substance classes of mineral oil, polyalkylbenzene, vegetable oil, glycolether, glycolester, glycolether ester and polyisobutylene.

4. Extender according to claim 3, characterized in that it contains 2-4% by weight of the additive.

5. Additive for reducing the residual toluene content of printings prepared in intaglio printing processes and/or flexo printing processes, containing
1-10% by weight of toluene,
1-10% by weight of a resin based on colophony and/or tall oil, a hydrocarbon resin or natural resin and
at least 90% by weight of a component having a boiling range of above 180°C, which is selected from one or more of the substance classes of mineral oil, polyalkylbenzene, vegetable oil, glycolether, glycolester, glycolether ester and polyisobutylene.

6. Use of an additive for reducing the residual toluene content of printings prepared in intaglio printing processes and/or flexo printing processes, containing
0-90% by weight of toluene,
0-50% by weight of a resin based on colophony and/or tall oil, a hydrocarbon resin or natural resin and
10-100% by weight of a component having a boiling range of above 180°C, which is selected from one or more of the substance classes of mineral oil, polyalkylbenzene, vegetable oil, glycolether, glycolester, glycolether ester and polyisobutylene.

7. Use of an additive containing
1-10% by weight of toluene,
1-10% by weight of a resin based on colophony and/or tall oil, a hydrocarbon resin or natural resin and
at least 90% by weight of a component having a boiling range of above 180°C, whereby said component is selected from one or more of the substance classes of mineral oil, polyalkylbenzene, vegetable oil, glycolether, glycolester, glycolether ester and polyisobutylene for reducing the residual toluene content of printings prepared in intaglio printing processes and/or flexo printing processes.

## Revendications

1. Encre d'imprimerie au toluène pour héliographie ou flexographie, excluant une encre d'imprimerie contenant du copolymère éthylène-acétate de vinyle et/ou du polypropylène chloruré et/ou du copolymère chlorure de vinyle-vinyltertiobutyléther, caractérisée en ce qu'elle inclut
30-70% en poids de toluène,
5-40% en poids de pigment et/ou de colorant,
5-50% en poids de dérivés de colophane et/ou de talloil,
0-40% en poids de résines d'hydrocarbures,
0-5% en poids de matières auxiliaires et
1-10% en poids d'un additif qui contient
0-90% en poids de toluène,
0-50% en poids d'une résine à base de colophane et/ou de talloil, d'une résine d'hydrocarbures ou d'une résine naturelle et
10-100% en poids d'un composant dont le domaine d'ébullition est supérieur à 180°C, choisi parmi l'un ou plusieurs des groupes de produits suivants, huile minérale, polyalkylbezène, huile végétale, éther de glycol, ester de glycol, ester d'éther de glycol, polyisobutène.

2. Encre d'imprimerie au toluène pour héliographie ou flexographie, excluant une encre d'imprimerie contenant du copolymère éthylène-acétate de vinyle et/ou du polypropylène chloruré et/ou du copolymère chlorure de vinyle-vinyltertiobutyléther, caractérisée en ce qu'elle inclut
30-70% en poids de toluène,
5-25% en poids de suie et, le cas échéant, de pigment et/ou de colorant,
5-30% en poids de dérivés de colophane et/ou de dérivés de talloil,
0-10% en poids de résines d'hydrocarbures,
0-30% en poids d'asphalte,
0-5% en poids de matières auxiliaires et
1-10% en poids d'un additif qui contient
0-90% en poids de toluène,
0-50% en poids d'une résine à base de colophane et/ou de talloil, d'une résine d'hydrocarbures ou d'une résine naturelle et
10-100% en poids d'un composant dont le domaine d'ébullition est supérieur à 180°C, choisi parmi l'un ou plusieurs des groupes de produits suivants, huile minérale, polyalkylbenzène, huile végétale, éther de glycol, ester de glycol, ester d'éther de glycol, polyisobutène.

3. Véhicule pour une encre d'imprimerie au toluène pour héliographie ou flexographie, excluant un véhicule contenant du copolymère éthylèneacétate de vinyle et/ou du polypropylène chloruré et/ou du copolymère chlorure de vinyle-vinyltertiobutyléther, caractérisée en ce qu'elle inclut
40-70% en poids de toluène,
0-30% en poids de dérivés de colophane et/ou de talloil,
0-20% en poids de résines d'hydrocarbures,
0-15% en poids de résines naturelles,
0-20% en poids d'esters de résines,
0-5% en poids de matières auxiliaires et
1-10% en poids d'un additif qui contient
0-90% en poids de toluène,
0-50% en poids d'une résine à base de colophane et/ou de talloil, d'une résine d'hydrocarbures ou d'une résine naturelle et
10-100% en poids d'un composant dont le domaine d'ébullition est supérieur à 180°C, choisi parmi l'un ou plusieurs des groupes de produits suivants, huile minérale, polyalkylbenzène, huile végétale, éther de glycol, ester de glycol, ester d'éther de glycol, polyisobutène.

4. Véhicule selon la revendication 3, caractérisé par le fait de contenir 2-4% en poids de l'additif.

5. Additif ayant pour but de réduire la teneur restante en toluène des imprimés fabriqués par héliographie et/ou flexographie, contenant
1-10% en poids de toluène,
1-10% en poids d'une résine à base de colophane et/ou de talloil, d'une résine d'hydrocarbures ou d'une résine naturelle et
au moins 90% en poids d'un composant dont le domaine d'ébullition est supérieur à 180°C, choisi parmi l'un ou plusieurs des groupes de produits suivants, huile minérale, polyalkylbenzène, huile végétale, éther de glycol, ester de glycol, ester d'éther de glycol, polyisobutène.

6. Utilisation d'un additif ayant pour but de réduire la teneur restante en toluène des imprimés fabriqués par héliographie et/ou flexographie et contenant
0-90% en poids de toluène,
0-50% en poids d'une résine à base de colophane et/ou de talloil, d'une résine d'hydrocarbures ou d'une résine naturelle et
10-100% en poids d'un composant dont le domaine d'ébullition est supérieur à 180°C, choisi parmi l'un ou plusieurs des groupes de produits suivants, huile minérale, polyalkylbenzène, huile végétale, éther de glycol, ester de glycol, ester d'éther de glycol, polyisobutène.

7. Utilisation d'un additif contenant
1-10% en poids de toluène,
1-10% en poids d'une résine à base de colophane et/ou de talloil, d'une résine d'hydrocarbures ou d'une résine naturelle et
au moins 90% en poids d'un composant dont le domaine d'ébullition est supérieur à 180°C, ce composant pouvant être choisi parmi l'un ou plusieurs des groupes de produits suivants, huile minérale, polyalkylbenzène, huile végétale, éther de glycol, ester de glycol, ester d'éther de glycol, polyisobutène, et ayant pour but de réduire la teneur restante en toluène des imprimés fabriqués par héliographie et/ou flexographie.
